# EUROPÄISCHE PATENTSCHRIFT

(11) **EP 0 633 644 B1**
(45) Veröffentlichungstag und Bekanntmachung des Hinweises auf die Patenterteilung: **21.08.1996**
(21) Anmeldenummer: 94109249.6
(22) Anmeldetag: 16.06.1994
(51) Int. Cl.: H02K 3/50

(54) **Vorrichtung zur Halterung der Windungsenden einer Statorwicklung in einer dynamoelektrischen Maschine**
Stator winding coil ends fastening device for a dynamoelectric machine
Dispositif de fixation des extrémités de bobinage d'un enroulement statorique dans une machine dynamoélectrique

(30) Priorität: 05.07.1993 DE 4322269
(43) Veröffentlichungstag der Anmeldung: 11.01.1995
(73) Patentinhaber: ABB Management AG, CH-5401 Baden (CH)
(72) Erfinder: Paroz, José-Pierre, CH-1400 Yverdon-les-Bains (CH); Zimmermann, Hans, CH-8617 Mönchaltorf (CH)

(56) Entgegenhaltungen:
- EP-A- 0 418 530
- EP-A- 0 432 720
- DE-A- 1 613 125
- DE-A- 2 600 928
- US-A- 4 488 079
- US-A- 4 800 314

## Beschreibung

### TECHNISCHES GEBIET

Die Erfindung bezieht sich auf eine Vorrichtung zur Halterung der Windungsenden einer Statorwicklung in einer dynamoelektrischen Maschine, umfassend einen Rotor und einen Stator, welcher Stator einen Blechkörper mit endseitigen Statorpressplatten aufweist und im Blechkörper in Nuten eine Unter- und Oberstäbe aufweisende Statorwicklung angeordnet ist, deren Enden den Blechkörper axial überragen, wobei Mittel zur Distanzierung der Unter- und Oberstäbe vorgesehen sind, welche Halterung einen Innenring, der sich unmittelbar oder unter Einschaltung einer Zwischenlage an die sich hohlkegelartig erweiternden Windungsenden der Statorwicklung anschmiegt, eine mehrteilige Aussenabstützung die sich an der Stirnseite des Blechörpers abstutzt.

Die Erfindung nimmt dabei Bezug auf einen Stand der Technik, wie er sich beispielsweise aus der EP-A-0 432 720 bzw. der inhaltgleichen US-A-5,140,740 ergibt.

### TECHNOLOGISCHER HINTERGRUND UND STAND DER TECHNIK

Die Befestigung der Wicklungsenden der Statorwicklungen (Wickelkopf) von Turbogeneratoren stellt infolge der grossen Beanspruchungen, welchen diese Wickelköpfe ausgesetzt sind, gewisse Probleme. Diese Beanspruchungen haben ihre Ursache in elektromagnetischen Kraftwirkungen, insbesondere bei Kurzschluss, in Schwingungserscheinungen und in unterschiedlichen Wärmedehnungen der Statorstäbe gegenüber dem Statoreisen während des Betriebes. Diese Belastungen führen früher oder später zu Lockerungen und Abrieberscheinungen, die schlussendlich zu Erd- und Kurzschlüssen führen.

Zur Verbesserung der Festigkeit der Wickelköpfe von grossen elektrischen Maschinen wurde eine Reihe von Systemen eingeführt, die mehrheitlich mit einteiligen Ringen aus Isoliermaterial als zentralem Abstützelement arbeiten.

Bei der Vorrichtung zur Halterung der Windungsenden einer Statorwicklung in einer elektrischen Maschine nach der DE-OS 16 13 125 schmiegt sich ein Aussenring von aussen an einen Teil der äusseren Lagen der Windungsenden an. Ein Innenring, der unabhängig vom Aussenring ist, greift an die inneren Lagen der Windungsenden an. Um die gegenseitige axiale Verschiebung der beiden Ringe zu unterbinden, sind als C-förmige Bügel ausgebildete Vorrichtungen , welche die Windungsenden umgreifen, zur Verbindung der beiden Bügel vorgesehen. Die beiden Ringe sind mit axial verlaufenden Halterungen verschraubt, die ihrerseits an der Stirnseite des Statorblechkörpers befestigt sind.

Die Wickelkopfhalterung nach der US-PS 48 00 314 verwendet nur einen Aussenring. Die Wickelkopfenden sind gruppenweise unter sich verkeilt und verklebt und an diesen Aussenring mittels Bändern angebunden.

Eine weitere, insbesondere für das Retrofit vorgesehene Lösung des Abstützproblemes ist Gegenstand der US-A-5,140,740 bzw. der inhaltsgleichen EP-A-0 432 720. Die dort vorgeschlagene Halterung weist einen Innenring auf, der sich an die sich hohlkegelartig erweiternden Windungsenden der Statorwicklung anschmiegt. Die Aussenabstützung besteht aus einem mindestens zweiteiligen Ring oder in Umfangsrichtung verlaufenden und untereinander verbundenen Abstützbalken. Zuganker, die am Innenring und Aussenring bzw. den Abstützbalken angreifen, dienen zur Verspannung von Innenring und Aussenabstützung. Alternativ können beim Bekannten der Aussenring und die Zuganker entfallen (Fig.4). Dann stützt sich der Innenring samt den Stirnbügeln des Wickelkopfes unter Zwischenschaltung von Spannkeilen an Winkeln ab, die an der Stirnseite des Statorblechkörpers befestigt sind.

Nachteilig ist bei beiden Alternativen, dass sie bei Lockerwerden des Wickelkopfverbandes nur mit viel Aufwand nachspannbar sind.

### KURZE DARSTELLUNG DER ERFINDUNG

Ausgehend vom Stand der Technik liegt der Erfindung die Aufgabe zugrunde, eine Halterung der eingang genannten Gattung zu schaffen, die wirtschaftlich und einfach herstellbar ist, allen Betriebsbeanspruchungen der genannten Art zuverlässig standhält und insbesondere nach eventuellen Lockerungen im Wickelkopfverband nachspannbar ist. Die Halterung soll darüber hinaus bei Service- und Instandhaltungsarbeiten und insbesondere im Rahmen von Retrofit-Arbeiten sowohl leicht zu montieren und ebenso einfach wieder zu entfernen sein.

Diese Aufgabe wird erfindungsgemäss dadurch gelöst, dass die Aussenabstützung einen mehrteiligen Aussenring, bestehend aus lösbar miteinander verbundenen Ringsegmenten, aufweist, dass die Ringsegmente teilweise in in Umfangsrichtung verlaufenden und miteinander fluchtenden Nuten am freien Ende der Konsolen liegen, dass der Innenring aus einem geschlossenen inneren Keilring, einem ein- oder mehrteiligen äusseren Keilring und Stützsegmenten besteht, wobei die Keilflächen an den beiden Keilringen in Richtung der sich hohlkegelartig erweiternden Windungsenden der Statorwicklung verlaufen, und dass die beiden Keilringe axial gegeneinander verspannbar sind.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung ist ein Ausführungsbeispiel der Erfindung schematisch dargestellt, und zwar zeigt:
- Fig.1: Einen vereinfachten Längsschnitt durch die NS-End-partie eines Turbogenerators;
- Fig.2: ein teilweisen Radialsschnitt durch die Endpartie des Turbogenerators gemäss Fig.l auf der Höhe der Innenabstützung längs deren Linie AA.

### WEGE ZUR AUSFÜHRUNG DER ERFINDUNG

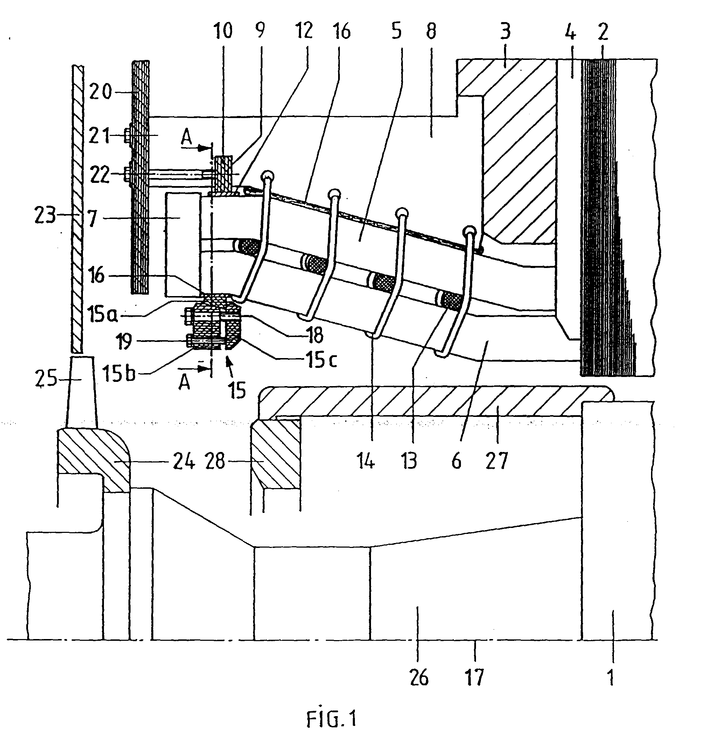

Im vereinfachten Längsschnitt durch die nicht-antriebsseitige Endpartie (NS-Seite oder Erregerseite) - eines Turbogenerators gemäss Fig.1 ist mit der Bezugsziffer 1 ein Rotor, mit 2 ein Statorblechkörper, mit 3 seine Pressplatte und mit 4 ein Pressfinger bezeichnet. Die Statorwicklung besteht aus einem Unterstab 5 und einem Oberstab 6, deren aus dem Statorblechkörper 2 herausragende Enden, die sogenannten Stirnbügel, mittels Oesen 7 miteinander elektrisch und mechanisch verbunden sind. Die Gesamtheit aller Stirnbügel bildet den Wickelkopf.

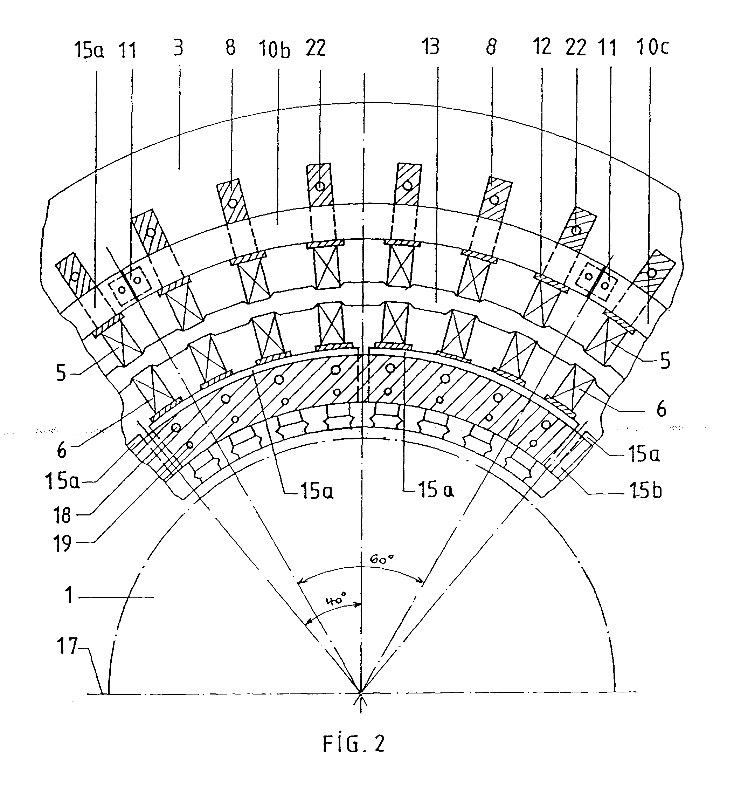

Zur Aussenabstützung des Wickelkopfes sind an der Statorpressplatte 3 befestigte Konsolen 8 vorgesehen. Diese weisen im Endbereich in Umfangsrichtung fluchtende Nuten 9 auf. Die Nuten verlaufen orthogonal zur Maschinenlängsachse und sind radial innen offen. In diese Nuten 9 ist ein mehrteiliger Ring aus Isoliermaterial, im folgenden Aussenring 10 genannt, bestehend aus im Beispielsfall 60° überdeckenden Segmenten 10, 10b,10c.. (Fig.2), eingelegt. Die einzelnen Segmente sind untereinander lösbar verbunden, z.B. mittels Laschen 11 verschraubt.

Die Unterstäbe 5 der Statorwicklung stützen sich unter Zwischenschaltung von isolierenden Zwischenlagen 12, z.B. aus Glasmatte oder Glasvlies, am Aussenring 10 ab. Zwischen Unter- und Oberstab 5 bzw. 6 sind gleichmässig über die axiale Ausladung des Wickelkopfes verteilt im Beispielsfall vier kunstharzgefüllte Druckschläuche 13 aus Isoliermaterial eingezogen, deren Funktion später näher erläutert wird. Unter-und Oberstäbe mitsamt den Druckschläuchen 13 sind mittels Glasfaserkordeln 14 oder Glasfaserlunten an den Konsolen 8 befestigt.

Die Innenabstützung erfolgt mit einer generell mit der Bezugsziffer 15 bezeichneten Innenringanordnung. Diese besteht im wesentlichen aus drei Baugruppen bzw. Bauteilen: einem mehrteiligen, aus Keilringsegmenten bestehendem äusseren Keilring 15a, einem geschlossenen inneren Keilring 15b und Stütsegmenten 15c. Zwischen der Auflagefläche am Oberstab 6 und der Auflagefläche am inneren Keilring 15a ist eine isolierende Zwischenlage 16, z.B. aus Glasvlies, vorgesehen.

Die radial innenliegende Keilfläche des äusseren Keilrings 15a und die radial aussenliegende Keilfläche des inneren Keilrings 15b verlaufen in etwa in Richtung der hohlkegelartig sich erweiternden Oberstäbe 6. Die Stützsegmente 15c stützen sich an der annähernd orthogonal zur Maschinenlängsachse 17 verlaufenden, dem Maschineninneren zugwandten Stirnfläche des äusseren Keilrings 15a ab. Mittels Spannschrauben 18, die in entsprechende Gewindebohrungen in den Stützsegmenten 15c eingeschraubt werden, kann der innere Keilring 15b gegenüber dem äusseren Keilring 15a in Achsrichtung verspannt werden. Mit in den inneren Keilring 15b eingeschraubten Stützschrauben 19, die auf den Stützsegmenten 15c aufliegen, lässt sich ein Verwinden des inneren Keilrings 15b verhindern.

Beim Zusammenspannen von innerem und äusserem Keilring können über den Aussenring 10 und die Konsolen 8 unzulässig hohe Zugspannungen auf den (aus Blechen geschichteten) Statorblechkörper 2 auftreten. Um diese Kräfte aufzunehmen ist eine einteilige Ringplatte 20 aus Isoliermaterial vorgesehen, die mittels Schrauben 21 an allen Konsolen 8 befestigt ist. Weitere Schraubbolzen 22 sind durch axial verlaufende und bis zu den Nuten 9 reichende Bohrungen in den Konsolen 8 geführt und sind dort mit dem Aussenring 10 verschraubt.

Aus Gründen der Vollständigkeit sind in Fig.l der äussere Abschluss 23 des Wickelkopfraumes, der auf dem Rotor 1 montierte Axialventilator 24 mit seinen Schaufeln 25 eingezeichnet, ebenso die Rotorwelle 26, Rotorkappe 27 und ihre Kappenplatte 28.

Die Herstellung des Wickelkopfverbandes vollzieht sich auf folgende Weise:

Vor dem Einlegen der Statorwicklungsstäbe 5, 6 werden die Segmente 10a, 10b, 10c,.. in die Nuten 9 eingelegt und mittels der Laschen 11 zum Aussenring verbunden. Nach dem Einlegen der Stäbe werden die Druckschläuche 13 eingezogen und die vorgängig oder nach dem Einbau mit härtbarem Kunstharz getränkten Glasfaserkordeln 14 angebracht. Danach wird die Ringplatte 20 an den Konsolen 8 befestigt, gleichzeitig wird der Aussenring 10 mit den Schraubbolzen 22 befestigt. Anschliessend wird der Innenring 15 eingesetzt und vorgespannt. Dann werden die Druckschläuche 13 mit härtbarem Tränkharz, z.B. Epoxidharz, gefüllt, unter Druck gesetzt und unter Druck wird das Tränkharz ausgehärtet. Bei dem Vorgang nehmen die Druckschläuche 13 die in Fig.2 übertrieben eingezeichnete Gestalt an, d.h. sie blähen sich in den Distanzen zwischen benachbarten Leiterstäben 5 bzw. 6 auf und sorgen dadurch für eine Fixierung und Distanzierung in Umfangsrichtung. Gleichzeitig drücken sie Unter- und Oberstäbe auseinander und Versteifen dadurch den Wickelkopfverband in radialer Richtung. Die Konsolen 8 und die Ringplatte 20 und auch der Aussenring 10 nehmen dabei radial nach aussen wirkende Kräfte auf, während der Innenring 15 radial nach innen wirkende Kräfte aufnimmt. Anstelle von den gesamten Umfang übergreifenden Druckschläuchen 13 können auch kürzere Schlauchstücke oder im Grenzfall kunstharzgefüllte Kissen verwendet werden. Wesentlich ist, dass diese Elemente, die im späteren Betrieb Abstützung- und Distanzierungsfunktionen aufweisen, im Zuge der Montage in erster Linie dem Verspannen des Wickelkopfverbandes dienen. Nach dem Aushärten des Kunstharzes und dem dabei praktisch unvermeidbar auftretenden Schwund wird der innere Keilring 15b gegen die äusseren Keilsegmente 15a verspannt und damit der gesamte Wickelkopf endgültig verfestigt.

Eine alternative Vorgehensweise besteht darin, mit "gewöhnlichen" Glasfaserlunten oder Glasfaserkordeln, die trocken eingezogen und danach mit härtbarem Kunstharz getränkt werden, oder bereits mit härtbarem Kunstharz getränkt sind und dann eingebaut werden, zu distanzieren, und dann erst den Wickelkopf mit dem Innenring 15 zu verspannen.

Sollten im späteren Betrieb Lockerungserscheinungen im Wickelkopfverband auftreten, lassen sich diese durch Nachspannen des Innenrings 15 ohne grossen Aufwand beseitigen.

### Bezeichnungsliste

- 1: Rotor
- 2: Statorblechkörper
- 3: Statorpressplatte
- 4: Pressfinger
- 5: Unterstab
- 6: Oberstab
- 7: Oesen
- 8: Konsolen
- 9: Nuten in 8
- 10: Aussenring
- 10a,b,c: Segmente von 10
- 11: Laschen
- 12,16: isolierende Zwischenlagen
- 13: kunstharzgefüllte Druckschläuche
- 14: Glasfaserkordel
- 15: Innenring
- 15a: äussere Keilsegmente
- 15b: innerer Keilring
- 15c: Stützsegmente
- 17: Maschinenlängsachse
- 18: Spannschrauben
- 19: Stützschrauben
- 20: Ringplatte
- 21: Schrauben
- 22: Schraubbolzen
- 23: Abschluss
- 24: Axialventilator
- 25: Schaufeln von 24
- 26: Rotorwelle
- 27: Rotorkappe
- 28: Kappenplatte

## Patentansprüche

1. Vorrichtung zur Halterung der Windungsenden einer Statorwicklung in einer dynamoelektrischen Maschine, umfassend einen Rotor (1) und einen Stator, welcher Stator einen Blechkörper (2) mit endseitigen Statorpressplatten (3) aufweist, wobei im Blechkörper in Nuten eine Unter- und Oberstäbe aufweisende Statorwicklung (5,6) angeordnet ist, deren Enden den Blechkörper (2) axial überragen, wobei Mittel (13) zur Distanzierung der Unter- und Oberstäbe (5,6) vorgesehen sind,welche Halterung einen Innenring (15), der sich unmittelbar oder unter Einschaltung einer Zwischenlage an die sich hohlkegelartig erweiternden Windungsenden der Statorwicklung (5,6) anschmiegt, und eine mehrteilige Aussenabstützung, die sich über Konsolen (8) an der Stirnseite des Blechkörpers (2) abstütz, aufweist, dadurch gekennzeichnet, dass die Aussenabstützung einen mehrteiligen Aussenring (10), bestehend aus lösbar miteinander verbundenen Ringsegmenten (10,10b,10c,...), aufweist, dass die Ringsegmente teilweise in in Umfangsrichtung verlaufenden und miteinander fluchtenden Nuten (9) am freien Ende der Konsolen (8) liegen, dass der Innenring (15) aus einem geschlossenen inneren Keilring (15b), einem ein- oder mehrteiligen äusseren Keilring (15a) und Stützsegmenten (15c) besteht, wobei die Keilflächen an den beiden Keilringen (15a,15b) in Richtung der sich hohlkegelartig erweiternden Windungsenden der Statorwicklung (5,6) verlaufen, und dass die beiden Keilringe (15a,15b) axial gegeneinander verspannbar sind.

2. Vorrichtung nach Anspruch 1, dadurch gekennzeichnet, daß alle Konsolen (8) mit einer gemeinsamen, orthogonal zur Maschinenlängsachse (17) verlaufenden Ringplatte (20) verbunden sind, welche an den freien Stirnseiten der Konsolen (8) lösbar befestigt ist.

3. Vorrichtung nach Anspruch 2, dadurch gekennzeichnet, dass auch die Ringsegmente (10a,10b,10c,...) des Aussenrings (10) mit der Ringplatte (20) verschraubt sind.

4. Vorrichtung nach einem der Ansprüche 1 bis 3, dadurch gekennzeichnet, dass zur Abstützung und gegenseitigen Distanzierung der Statorwicklungsleiter (5,6) mit härtbarem Kunstharz gefüllte Druckschläuche (13) in die Distanzen zwischen Unter- und Oberstäben eingezogen sind.

5. Vorrichtung nach einem der Ansprüche 1 bis 3, dadurch gekennzeichnet, dass zur Abstützung und gegenseitigen Distanzierung der Statorwicklungsleiter (5,6) mit härtbarem Kunstharz getränkte Glasfaserkordeln oder Glasfaserlunten in die Distanzen zwischen Unter-(5) und Oberstäber (6) eingezogen sind.

6. Vorrichtung nach einem der Ansprüche 1 bis 5, dadurch gekennzeichnet, dass die beiden Keilringe (15a,15b) mittels Spannschrauben (18) und Stützschrauben (19) axial gegeneinander verspannbar sind, wobei die Spannschrauben (18) in die Stützsegmente (15c) einschraubbar sind und die Stützschrauben (19) sich auf den nach aussen gerichteten Stirnflächen der besagten Stützsegmente (15c) abstützen.

## Claims

1. Device for holding the ends of the turns of a stator winding in a dynamoelectric machine, comprising a rotor (1) and a stator, which stator has a laminated core (2) with end-side stator core end plates (3), there being arranged in the laminated core in slots a stator winding (5,6) which has bottom and top bars and whose ends overlap the laminated core (2) axially, means (13) being provided for spacing the bottom and top bars (5,6), which holder has an inner ring (15) which fits closely, directly or with the inclusion of a separator, against the ends of the turns of the stator winding (5,6), which ends expand like an internal taper, and which has a multipart external support which is supported by brackets (8) on the end face of the laminated core (2), characterized in that the external support has a multipart outer ring (10) consisting of ring segments [(10 [lacuna], 10b, 10c,...) detachably connected to one another, in that the ring segments are partially situated at the free end of the brackets (8) in slots (9) which extend in the circumferential direction and are aligned with one another, in that the inner ring (15) consists of a closed inner conical ring (15b), a single-part or multipart outer conical ring (15a) and support segments (15c), the conical surfaces on the two conical rings (15a, 15b) extending in the direction of the ends of the turns of the stator winding (5, 6), which ends expand like an internal taper, and in that the two conical rings (15a, 15b) can be braced axially against one another.

2. Device according to Claim 1, characterized in that all the brackets (8) are connected to a common annular plate (20) which extends orthogonally relative to the longitudinal axis (17) of the machine and is detachably fastened to the free end faces of the brackets (8).

3. Device according to Claim 2, characterized in that the ring segments (10a, 10b, 10c...) of the outer ring (10) are also bolted to the annular plate (20).

4. Device according to one of Claims 1 to 3, characterized in that pressure hoses (13) which are filled with curable synthetic resin for the purpose of support and mutual spacing of the stator winding conductors (5, 6) are drawn into the spacings between the bottom and top bars.

5. Device according to one of Claims 1 to 3, characterized in that glass fibre strands or glass fibre rovings which are impregnated with curable synthetic resin for the purpose of support and mutual spacing of the stator winding conductors (5, 6) are drawn into the spacings between the bottom (5) and top bars (6).

6. Device according to one of Claims 1 to 5, characterized in that the two conical rings (15a, 15b) can be braced axially against one another by means of clamping bolts (18) and setscrews (19), it being possible to screw the clamping bolts (18) into the support segments (15c), and the setscrews (19) being supported on the outwardly directed end faces of the said support segments (15c).

## Revendications

1. Dispositif de fixation des extrémités de bobinage d'un enroulement statorique dans une machine dynamoélectrique, comprenant un rotor (1) et un stator, stator qui présente un corps en tôle (2) avec des plaques (3) de serrage du stator aux côtés d'extrémité, dans lequel un enroulement statorique (5, 6) présentant des barreaux inférieurs et supérieurs, dont les extrémités dépassent axialement le corps en tôle (2), est disposé dans des encoches dans le corps en tôle, dans lequel il est prévu des moyens (13) pour maintenir à distance les barreaux inférieurs et les barreaux supérieurs (5, 6), fixation qui présente un anneau intérieur (15), qui s'adapte directement ou avec interposition d'une couche intermédiaire aux extrémités de bobinage de l'enroulement statorique (5, 6) qui s'évasent en cône creux, et un support extérieur en plusieurs parties, qui s'appuie par des consoles (8) sur la face frontale du corps en tôle (2), caractérisé en ce que l'appui extérieur présente un anneau extérieur (10) en plusieurs parties, se composant de segments annulaires (10, l0b, 10c,...) assemblés l'un à l'autre de façon détachable, en ce que les segments annulaires sont placés partiellement dans des encoches périphériques (9) et en affleurement l'une avec l'autre à l'extrémité libre des consoles (8), en ce que l'anneau intérieur (15) se compose d'un anneau de calage intérieur fermé (15b), d'un anneau de calage extérieur en une ou plusieurs parties (15a) et de segments d'appui (15c), dans lequel les faces de calage sur les deux anneaux de calage (15a, 15b) sont orientées dans la direction des extrémités de bobinage s'évasant en cône creux de l'enroulement statorique (5, 6), et en ce que les deux anneaux de calage (15a, 15b) peuvent être serrés axialement l'un contre l'autre.

2. Dispositif suivant la revendication 1, caractérisé en ce que toutes les consoles (8) sont reliées à une plaque annulaire (20) commune, orientée perpendiculairement à l'axe longitudinal (17) de la machine, qui est fixée de façon détachable aux faces frontales libres des consoles (8).

3. Dispositif suivant la revendication 2, caractérisé en ce que les segments annulaires (10a, 10b, 10c,...) de l'anneau extérieur (10) sont également boulonnés à la plaque annulaire (20).

4. Dispositif suivant l'une des revendications 1 à 3, caractérisé en ce que, pour l'appui et l'écartement mutuel des conducteurs de l'enroulement statorique (5, 6), des tuyaux souples sous pression (13) remplis de résine synthétique durcissable sont introduits dans les espaces entre les barreaux inférieurs et supérieurs.

5. Dispositif suivant l'une des revendications 1 à 3, caractérisé en ce que, pour l'appui et l'écartement mutuel des conducteurs de l'enroulement statorique (5, 6), des cordes de fibres de verre ou des mèches de fibres de verre, imprégnées de résine synthétique durcissable, sont introduites dans les espaces entre les barreaux inférieurs (5) et supérieurs (6).

6. Dispositif suivant l'une des revendications 1 à 5, caractérisé en ce que les deux anneaux de calage (15a, 15b) peuvent être serrés l'un contre l'autre au moyen de vis de serrage (18) et de vis d'appui (19), les vis de serrage (18) pouvant être vissées dans les segments d'appui (15c) et les vis d'appui (19) s'appuyant sur les faces frontales desdits segments d'appui (15c) tournées vers l'extérieur.
